# EUROPEAN PATENT APPLICATION

(11) **EP 4 772 861 A1**
(43) Date of publication of application: **08.07.2026**
(21) Application number: 24888302.7
(22) Date of filing: 24.07.2024
(51) Int. Cl.: G01N 21/898, G06T 7/00

(54) **IMAGE PROCESSING DEVICE**

(30) Priority: 08.11.2023 JP 2023190996
(71) Applicant: TMT Machinery, Inc., Osaka-shi, Osaka 541-0041 (JP)
(72) Inventor: HASHIMOTO, Kinzo, Kyoto-shi, Kyoto 612-8686 (JP); KAWAMOTO, Kazuhiro, Kyoto-shi, Kyoto 612-8686 (JP)
(74) Representative: Hoffmann Eitle
(86) International application number: PCT/JP2024/026449
(87) International publication number: WO 2025/100000

(57) **Abstract**

An object of the present invention is to accurately extract an uneven area from a picture image obtained by taking a picture of a dyed knit fabric, and to evaluate the dyeing quality of the knit fabric.
an edge is detected on the picture image of the photographed knit fabric, each high contrast area in which the gradient of the edge 11 is equal to or higher than a first predetermined value is extracted, and a possible uneven area which is a candidate of an uneven area is extracted from high contrast areas (steps S105 to S107). Meanwhile, highly similar areas which are highly similar to a sample image of a needle loop are extracted on the picture image, information of a position of a representative of the needle loop corresponding to each highly similar area is acquired, and information of positions of needle loops is acquired based on information of positions of representatives (steps S108 to S110). An area which is of the possible uneven area and which continuously extends across a predetermined number or more of the needle loops is extracted as an uneven area (step S111), and the dyeing quality of the knit fabric is evaluated based on the extracted uneven area (step S112).

## Description

### [Technical Field]

The present invention relates to an image processor configured to extract an uneven area corresponding to uneven dyeing from a picture image obtained by taking a picture of a dyed knit fabric.

### [Background]

Patent Literature 1 describes an image processor configured to extract an uneven area corresponding to uneven dyeing from a picture image obtained by taking a picture of a dyed knit fabric. The image processor of Patent Literature 1 converts the picture image to a gray scale, removes stitches from the knit fabric on the picture image, smooths the picture image, and then detects an edge in which brightness significantly changes on the picture image. Subsequently, the image processor of Patent Literature 1 extracts a high contrast area in which the gradient of the edge (inclination of the brightness) is equal to or higher than a predetermined value. The image processor of Patent Literature 1 then removes the noise from an image having been processed as described above, and corrects the inclination of the image. To be more specific, the inclination of the image is corrected by calculating inclinations of some high contrast areas in a least-squares method and rotating the image in accordance with an average of these calculated inclinations. The image processor of Patent Literature 1 then extracts, from a high contrast area, an area which has the characteristics of actual uneven dyeing and which is narrow and long in a course direction as the uneven area. To be more specific, a high contrast area which meets both the following conditions is extracted as the uneven area: a condition in which "aspect ratio of the size in the course direction to the size in a wale direction is equal to or higher than a predetermined value"; and a condition in which "the size in the wale direction is within a predetermined range". In Patent Literature 1, the dyeing quality of the knit fabric is evaluated based on the uneven area extracted by the image processor.

### [Citation List]

### [Patent Literatures]

[Patent Literature 1] Japanese Laid-Open Patent Publication No. 2021-140373

### [Summary of the Invention]

### [Technical Problem]

Patent Literature 1 corrects the inclination of the image as described above, and then extracts an area which is narrow and long in the course direction as the uneven area from a high contrast area. However, there are slight variations in stitches. Therefore, even when the inclination of the image is corrected, a transverse direction of the image whose inclination has been corrected may not coincide with an actual course direction of each stitch so as to deteriorate the accuracy of extraction of the uneven area.

An object of the present invention is to provide an image processor capable of further accurately extracting an uneven area from a picture image obtained by taking a picture of a dyed knit fabric.

### [Solution to Problem]

According to a first aspect of the invention, an image processor is configured to extract an uneven area corresponding to uneven dyeing from a picture image obtained by taking a picture of a dyed knit fabric. The image processor is further configured to perform: a brightness information acquisition process of acquiring brightness information which is information of brightness at each position on the picture image; a possible uneven area information acquisition process of acquiring possible uneven area information which is information of a position of at least one possible uneven area which is a candidate of the uneven area based on the brightness information; a stitch information acquisition process of acquiring stitch information which is information of a position of a stitch on the picture image based on the brightness information; and an uneven area extraction process of extracting the uneven area based on the possible uneven area information and the stitch information.

A direction in which an area with the uneven dyeing extends is determined by a direction of the stitch of the knit fabric. The direction of the stitch may vary among areas of the knit fabric because of the influence of variation of the stitch, etc. In this aspect of the present invention, the following information is acquired based on the brightness information: the possible uneven area information which is the information of the position of the at least one possible uneven area which is the candidate of the uneven area. Furthermore, the stitch information which is the information of the stitch on the picture image is acquired based on the brightness information. The uneven area is extracted based on the possible uneven area information and the stitch information. Because of this, even when the direction of the stitch varies, the uneven area is accurately extracted.

According to a second aspect of the invention, the image processor of the first aspect is arranged such that information of positions of needle loops forming the stitch is acquired as the stitch information in the stich information acquisition process.

The direction of the stitch of the knit fabric is determined by a direction in which the needle loops are aligned. The direction in which the needle loops are aligned may vary among areas of the knit fabric because of the influence of variation of the stitch, etc. In this aspect of the present invention, the uneven area is accurately extracted based on the possible uneven area information and the information of the positions of the needle loops functioning as the stitch information. Because of this, even when the direction in which the needle loops are aligned varies, the uneven area is accurately extracted.

According to a third aspect of the invention, the image processor of the second aspect further includes a storage unit which stores sample image information which is information of a sample image of one of the needle loops. Furthermore, in the stitch information acquisition process, highly similar areas which are highly similar to the sample image are extracted on the picture image based on the brightness information and the sample image information, and the information of the positions of the needle loops is acquired by using information of positions of the highly similar areas.

An area where each of the needle loops is located on the picture image is highly similar to the sample image. In this aspect of the present invention, the highly similar areas which are highly similar to the sample image are extracted on the picture image, and the information of the positions of the needle loops is acquired by using the information of the positions of the highly similar areas.

According to a fourth aspect of the invention, the image processor of the third aspect is arranged such that, in the stitch information acquisition process, information of a position of a representative of each of the needle loops is acquired in each of the highly similar areas based on the brightness information, and the information of the positions of the needle loops is acquired based on the information of the position of the representative of the each of the needle loops in the highly similar areas.

In this aspect of the present invention, the information of the position of the representative of the each of the needle loops is acquired in the each of the highly similar areas, and the information of the positions of the needle loops is acquired based on the information of the positions of the representatives of the needle loops. Because of this, the information of the positions of the needle loops is accurately acquired.

According to a fifth aspect of the invention, the image processor of any one of the second to fourth aspects is arranged such that, in the possible uneven area information acquisition process, an edge included in the picture image is detected based on the brightness information, at least one high contrast area in which the gradient of the edge is equal to or higher than a first predetermined value is extracted, among the at least one high contrast area, a high contrast area whose aspect ratio of the size in a course direction to the size in a wale direction is equal to or higher than a second predetermined value is extracted as the at least one possible uneven area. Furthermore, in the uneven area extraction process, a continuous area part which is of the at least one possible uneven area and which overlaps a predetermined number or more of the needle loops aligned serially along the course direction is extracted as the uneven area.

In this aspect of the present invention, the high contrast area whose aspect ratio of the size in the course direction to the size in the wale direction is equal to or higher than the second predetermined value is extracted as the at least one possible uneven area, and the continuous area part which is of the at least one possible uneven area and which overlaps the predetermined number or more of the needle loops aligned serially along the course direction is extracted as the uneven area. Because of this, the high contrast area whose aspect ratio is high, i.e., the high contrast area which has the characteristics of actual uneven dyeing and which is narrow and long in the course direction is extracted as the at least one possible uneven area. Furthermore, the continuous area part of the at least one extracted possible uneven area which is continuous in the direction in which the needle loops are aligned is extracted as the uneven area. It is therefore possible to accurately extract the uneven area.

According to a sixth aspect of the invention, the image processor of the fifth aspect is arranged such that, in the possible uneven area information acquisition process, among the at least one high contrast area, the high contrast area whose aspect ratio of the size in the course direction to the size in the wale direction is equal to or higher than the second predetermined value and whose size in the wale direction is within a predetermined range is extracted as the at least one possible uneven area.

In this aspect of the present invention, the high contrast area whose aspect ratio of the size in the course direction to the size in the wale direction is equal to or higher than the second predetermined value and whose size in the wale direction is within the predetermined range is extracted as the at least one possible uneven area. Because of this, the high contrast area whose aspect ratio is high and which is short in the wale direction, i.e., the high contrast area which has the characteristics of the uneven dyeing and which is narrow and long in the course direction is extracted as the at least one possible uneven area.

According to a seventh aspect of the invention, the image processor of any one of the second to fourth aspects is arranged such that, in the stitch information acquisition process, information of positions of needle loop areas which are aligned in the wale and course directions and which respectively include the needle loops on the picture image is acquired as the information of the positions of the needle loops. Furthermore, in the possible uneven area information acquisition process, representative brightness which is a representative value of the brightness of a yarn area where a yarn is located is calculated in each of the needle loop areas based on the brightness information and the stitch information, and at least one which is of the needle loop areas and whose representative brightness meets a predetermined condition is extracted as the at least one possible uneven area. Furthermore, in the uneven area extraction process, the at least one possible uneven area includes possible uneven areas, and an area extending across a predetermined number or more of the possible uneven areas aligned serially along the course direction is extracted as the uneven area.

In this aspect of the present invention, the representative brightness is calculated in the yarn area of the each of the needle loop areas, and the at least one which is of the needle loop areas and whose representative brightness meets the predetermined condition is extracted as the at least one possible uneven area. The area extending across the predetermined number or more of the possible uneven areas aligned serially along the course direction is extracted as the uneven area. Because of this, the uneven area is accurately extracted.

The present invention makes it possible to further accurately extract an uneven area.

### [Brief Description of Drawings]

FIG. 1 is a schematic diagram of a test facility for evaluating the dyeing quality of a knit fabric sample.
FIG. 2 is a schematic diagram of an enlarged part of the knit fabric sample.
FIG. 3 is a flowchart of a series of processes performed by an image processor of First Embodiment.
FIG. 4(a) shows an example of an edge detection image, FIG. 4(b) shows an example of a high contrast area extraction image, and FIG. 4(c) shows an example of a possible uneven area extraction image.
FIG. 5(a) shows an example of a sample image, FIG. 5(b) is provided for explaining a representative of a needle loop, and FIG. 5(c) is provided for explaining the acquisition of the position of the needle loop.
FIG. 6(a) shows an example of the detected needle loop, FIG. 6(b) shows an enlarged part of FIG. 4(c), and FIG. 6(c) is a diagram obtained by causing FIGs. 6(a) and 6(b) to overlap each other.
FIG. 7 is a flowchart of a series of processes performed by an image processor of Second Embodiment.
FIG. 8(a) is provided for explaining a needle loop area, and FIG. 8(b) shows an example of distribution of average brightness of a yarn area in each needle loop area.

### [Preferred Embodiment of Invention]

### [First Embodiment]

The following will describe preferred First Embodiment of the present invention with reference to figures.

### <Outline of Test Facility>

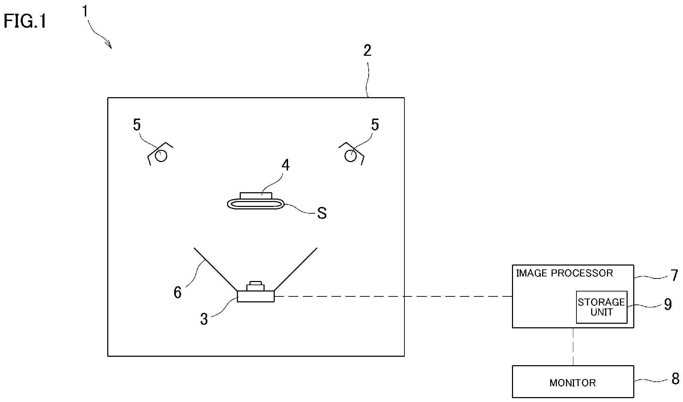

FIG. 1 is a schematic diagram of a test facility 1 for evaluating the dyeing quality of a knit fabric sample in First Embodiment. In the test facility 1, a camera 3 takes a picture of a knit fabric sample S (knit fabric of the present invention), an image processor 7 processes a photographed picture image, an uneven area corresponding to uneven dyeing is extracted from the picture image, and the dyeing quality of the knit fabric sample S is evaluated.

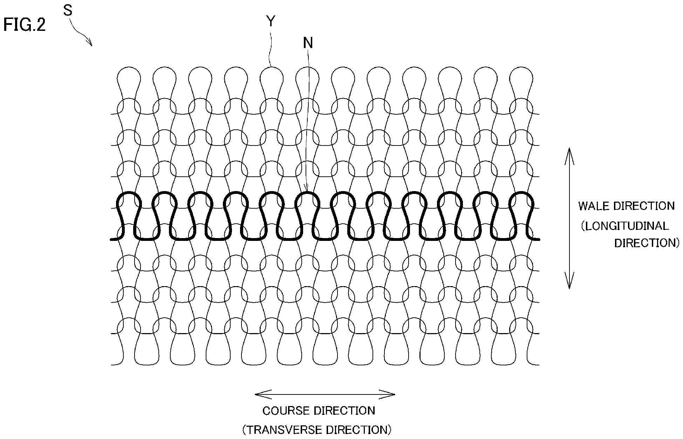

The following will describe the knit fabric sample S first. FIG. 2 is a schematic diagram of an enlarged part of the knit fabric sample S. The knit fabric sample S is, e.g., a dyed knit fabric obtained by knitting a synthetic fiber yarn Y made of polyester into a cylindrical shape. In the knit fabric sample S, needle loops N are formed by one yarn Y and aligned in a course direction (transverse direction), and the yarn Y is hooked onto each of these needle loops N so that needle loops N are additionally formed and aligned in a wale direction (longitudinal direction orthogonal to the course direction). That is, stitches of the knit fabric sample S are formed by these needle loops N. Typically, the uneven dyeing of the yarn Y occurs continuously in a lengthwise direction of the yarn Y. Therefore, when the knit fabric sample S is dyed, the uneven dyeing occurs as a stripe area extending along the course direction as indicated by a bold line in FIG. 2.

For the sake of convenience, the course direction is shown as a direction parallel to the transverse direction of FIG. 2, and the wale direction is shown as a direction parallel to the longitudinal direction of FIG. 2. However, in an actual knit fabric sample S, a direction in which the needle loops N are aligned may vary among areas of the knit fabric sample S in the course and wale directions because of the influence of variation of stitches, etc.

Referring back to FIG. 1, the test facility 1 will be described. The test facility 1 includes the camera 3, a supporter 4, two lights 5, a reflector 6, the image processor 7, and a monitor 8. The camera 3, the supporter 4, the two lights 5, and the reflector 6 are provided in a photo darkroom 2. The knit fabric sample S is supported by the supporter 4 provided at a central portion of the photo darkroom 2 so that openings of the knit fabric knitted into a cylindrical shape are open in an up-down direction, i.e., the course direction of the knit fabric is a horizontal direction.

The camera 3 is horizontally provided in front of the supporter 4. With this arrangement, the camera 3 is able to take a picture of a front surface of the knit fabric sample S so that the course direction of the knit fabric sample S is substantially parallel to a horizontal axial direction of the picture image. The knit fabric sample S is photographed after setting (i) the magnification ratio of the camera 3 and (ii) the distance between the camera 3 and the knit fabric sample S in predetermined values respectively so that the size of the knit fabric sample S on the picture image is known one. In the present embodiment, the size of the knit fabric sample S in the course direction (transverse direction) on the picture image is set approximately in 2056 pixels.

The two lights 5 are provided behind the supporter 4 to be left-right symmetrical about the supporter 4. The two lights 5 are located on a straight line which is inclined from a straight line connecting the camera 3 to the supporter 4 approximately by 45 degrees and which passes through the camera 3. The reflector 6 is provided near the camera 3 so as to reflect the light from the two lights 5 toward the knit fabric sample S. With this arrangement, the front surface of the knit fabric sample S has brightness suitable for being photographed.

The image processor 7 is formed of a CPU, a memory, a hard disk, and the like. The image processor 7 is electrically connected to the camera 3, and able to take in image data of the picture image of the knit fabric sample S photographed by the camera 3. The image processor 7 performs a predetermined image process for the picture image of the knit fabric sample S photographed by the camera 3, so that an uneven area corresponding to the actual uneven dyeing is extracted from the picture image. Subsequently, the image processor 7 evaluates the dyeing quality of the knit fabric sample S based on the extracted uneven area. The monitor 8 is connected to the image processor 7. The monitor 8 is able to display the picture image of the knit fabric sample S, an evaluation result of the dyeing quality of the knit fabric sample S, and the like.

### <Extraction of Uneven Area and Evaluation of Dyeing Quality>

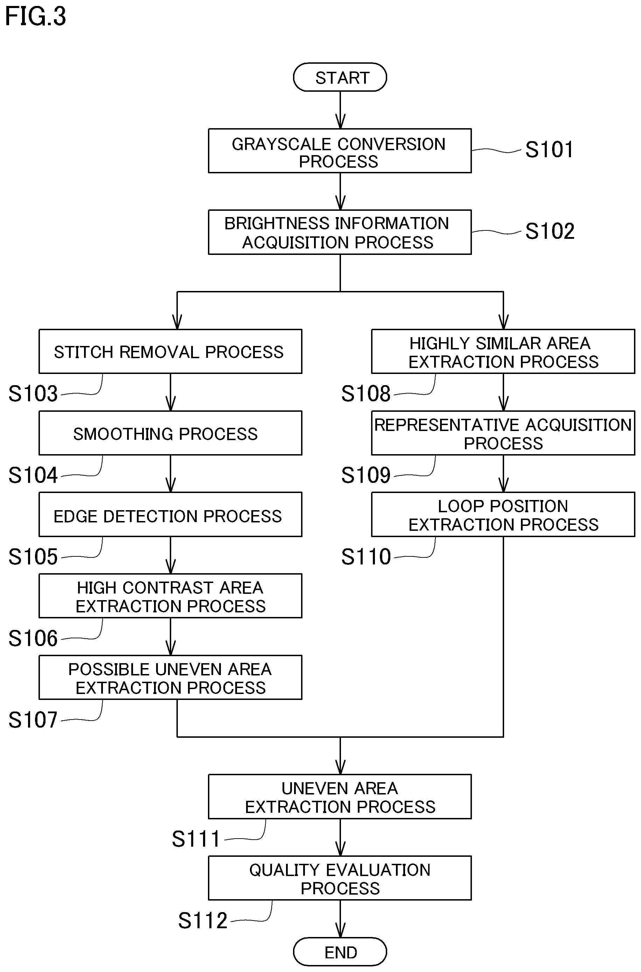

The following will describe the extraction of the uneven area and the evaluation of the dyeing quality which are performed by the image processor 7. FIG. 3 is a flowchart of a series of processes performed by the image processor 7. To begin with, the image processor 7 performs a grayscale conversion process (step S101). In the grayscale conversion process, the image processor 7 takes in image data of the picture image of the knit fabric sample S photographed by the camera 3 and converts the picture image to a gray scale. The speed of a calculation process is increased by processing the grayscale picture image. Furthermore, when an edge detection process is performed in a step S105, an obscure edge due to an effect of color is avoided. Furthermore, when the position of each needle loop N is extracted in a step S110, an obscure periphery of the needle loop N due to the effect of color is avoided. However, the subsequent processes are performable for the color image without converting the picture image to the gray scale.

Subsequently, the image processor 7 performs a brightness information acquisition process (step S102). In the brightness information acquisition process, the image processor 7 acquires brightness information which is information regarding the brightness at each position on the grayscale picture image. Subsequently, the image processor 7 performs the steps S103 to S107 in parallel with the steps S108 to S110 as described below.

In the step S103, the image processor 7 performs a stitch removal process. In the stitch removal process, the image processor 7 removes stitches from the grayscale picture image based on the brightness information having been acquired in the step S102. For example, the technique described in Japanese Laid-Open Patent Publication No. 2015-212924 may be adopted to remove the stitches. To be more specific, the following information is removed by a lowpass filter: cycle information including the number of repetitions equal to or higher than a × N obtained by multiplying the number of repetitions (known number) of the needle loop N per unit length by a known coefficient a. The coefficient a is, e.g., any value within a range of 0.7 to 0.9. However, a removal method of the stitches is not limited to this. Another removal method may be adopted.

Subsequently, the image processor 7 performs a smoothing process (step S104). In the smoothing process, the image processor 7 smooths the picture image from which the stitches have been removed. The smoothing is performed for removing the small noise due to the remaining stitches which have not been removed in the step S103. For example, a known Wiener filter can be used for the smoothing. The size of the filter is, e.g., 5 to 25 pixels × 10 to 60 pixels. However, the type and size of the filter are not limited to those. The subsequent processes may be performed without the smoothing process.

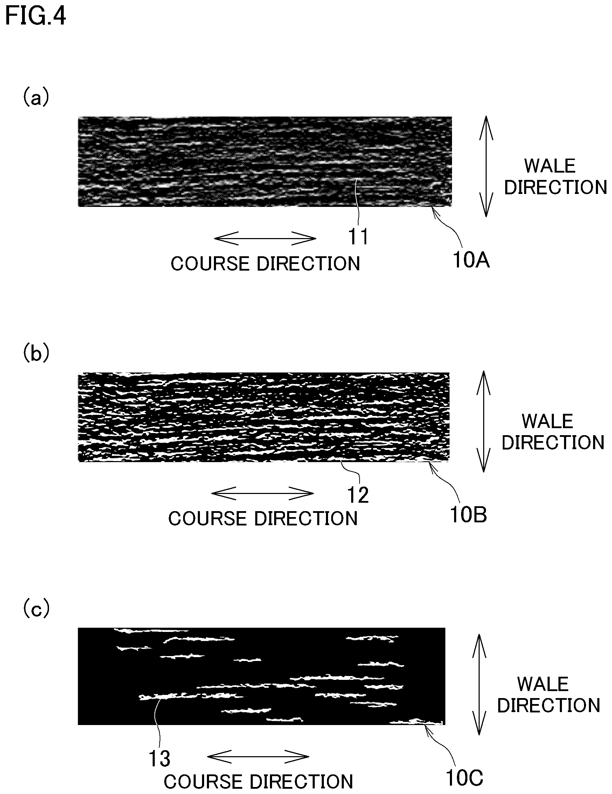

Subsequently, the image processor 7 performs the edge detection process for the picture image which has been smoothed (step S105). The edge detecting process is performed for detecting an edge in which the brightness significantly changes on the picture image. For example, a known Prewitt filter can be used for the edge detection process. The size of the filter is, e.g., 3 pixels × 3 pixels. However, the type and size of the filter are not limited to those. FIG. 4(a) shows an example of an edge detection image 10A which is the picture image from which an edge 11 is detected by the edge detection process. As shown in each image of FIG. 4, the transverse direction of each image corresponds to the course direction, and the longitudinal direction of each image corresponds to the wale direction.

Subsequently, the image processor 7 performs a high contrast area extraction process (step S106). In the high contrast extraction process, the image processor 7 extracts the high contrast area 12 in which the gradient of the edge 11 (inclination of the brightness) is equal to or higher than a first predetermined value. To be more specific, the image processor 7 performs, for the edge detection image 10A, a binarization process in which the above-described first predetermined value is a threshold. As a result, pixels in which the gradient of the edge 11 is equal to or higher than the threshold are shown in white, and pixels in which the gradient of the edge 11 is less than the threshold are shown in black. FIG. 4(b) is a high contrast area extraction image 10B obtained by extracting a high contrast area 12 from the edge detection image 10A of FIG. 4(a) and showing a high contrast area 12 in white. For example, the above-described first predetermined value may be determined in the same manner as in Patent Literature 1. To be more specific, a histogram is created in regard to the edge detection image 10A so that the gradient of the edge 11 is taken as a transverse axis and the number of pixels is taken as a vertical axis. An upper limit value U of the gradient of the edge 11 is calculated based on this histogram, and a value obtained by calculating b × U is used as a threshold. The b × U is obtained by multiplying the upper limit value U of the gradient of the edge 11 by a predetermined coefficient b. The coefficient b is, e.g., any value within a range of 0.15 to 0.5. However, the upper limit value may be differently determined.

Subsequently, the image processor 7 performs a possible uneven area extraction process (step S107). In the possible uneven area extraction process, among at least one high contrast area 12, a high contrast area 12 which has the characteristics of the actual uneven dyeing and which is narrow and long in the course direction is extracted as a possible uneven area 13 which is a candidate of the uneven area. To be more specific, the high contrast area 12 which meets both the following conditions is extracted as the possible uneven area 13: a condition in which "aspect ratio of the size in the course direction to the size in the wale direction is equal to or higher than a second predetermined value"; and a condition in which "the size in the wale direction is within a predetermined range". Because of this, information of the position of the possible uneven area 13 is acquired.

FIG. 4(c) shows a possible uneven area extraction image 10C obtained by extracting the possible uneven area 13 from the high contrast area extraction image 10B of FIG. 4(b), i.e., shows an image obtained by performing the possible uneven area extraction process for the high contrast area extraction image 10B of FIG. 4(b). As shown by the comparison between FIG. 4(b) and FIG. 4(c), as the possible uneven area extraction process is performed, (i) one high contrast area 12 which does not have the characteristics of the actual uneven dyeing and which is thick or narrow is removed and (ii) another high contrast area 12 which extends linearly to be narrow and long in the course direction is extracted as the possible uneven area 13.

In the possible uneven area extraction process, each area which meets the above-described two conditions is extracted as the possible uneven area 13 on the premise that (i) the transverse direction of the high contrast area extraction image 10B is used as the course direction and (ii) the longitudinal direction of the high contrast area extraction image 10B is used as the wale direction. That is, the possible uneven area 13 is extracted in the possible uneven area extraction process regardless of variation among areas of the above-described knit fabric sample S in the course and wale directions.

In First Embodiment, a combination of the steps S105 to S107 is equivalent to a possible uneven area information acquisition process of the present invention.

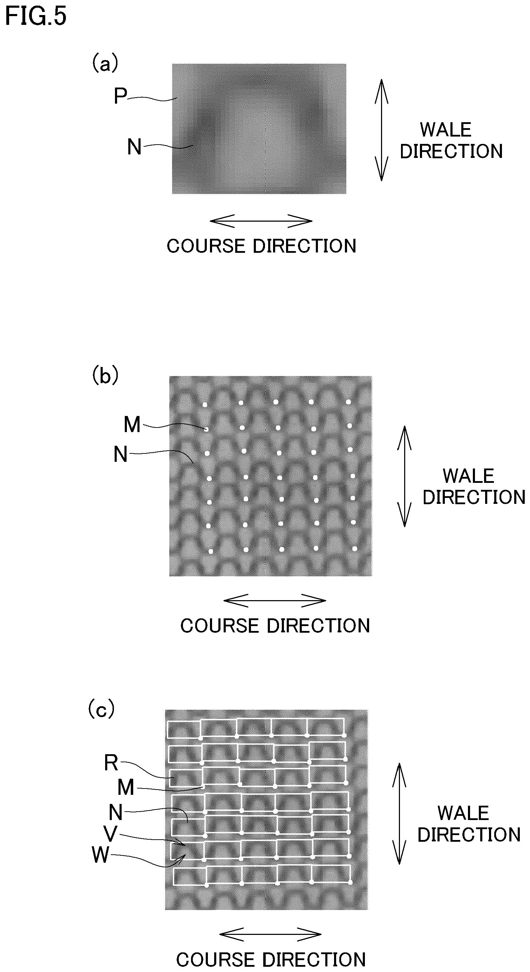

In the step S108, the image processor 7 performs a highly similar area extraction process. In this regard, as shown in FIG. 1, the image processor 7 includes a storage unit 9. The storage unit 9 stores, e.g., information of a sample image P of one needle loop N as shown in FIG. 5(a). In the present embodiment, this information of the sample image P is equivalent to "sample image information" of the present embodiment. For easier understanding of the figure, FIG. 5(a) shows the enlarged sample image P. In the highly similar area extraction process, the image processor 7 compares each area on the picture image with the sample image P and extracts highly similar areas which are on the picture image and which are highly similar to the sample image P. Because of this, an area where each needle loop N is located is roughly extracted on the picture image. In the highly similar area extraction process, for example, a correlation matrix is calculated based on data of the brightness of each area on the picture image and data of the sample image P, and each highly similar area is extracted based on a value of a correlation coefficient in the correlation matrix. However, a method of extracting the highly similar areas is not limited to this. Although not illustrated, the extracted highly similar areas are similar to needle loop areas R (see FIG. 5(c)) described later. However, the highly similar areas are not as accurate as the needle loop areas R in regard to the position of the actual needle loop N.

Subsequently, the image processor 7 performs a representative acquisition process (step S109). In the representative acquisition process, as shown in FIG. 5(b), the image processor 7 acquires information of positions of representatives M of needle loops N corresponding to the highly similar areas having been extracted in the step 108, based on the distribution of brightness of each of the highly similar areas. FIG. 5(b) shows a case where information of a position of a lower right part of each needle loop N in this figure is acquired as information of a position of a representative M of the needle loop N. However, for example, information of another position of each needle loop N may be acquired as the information of the position of the representative M. Examples of this information of another position of the needle loop N include information of a position of a lower left part of each needle loop N in FIG. 5(b), information of a position of an upper end of each needle loop N in FIG. 5(b), and the like.

Subsequently, the image processor 7 performs a loop position extraction process (step S110). In the loop position extraction process, the image processor 7 acquires information of positions of needle loop areas R where the respective needle loops N are located on the picture image, based on the information of the positions of the representatives M having been acquired in the representative acquisition process. FIG. 5(c) shows an example of the needle loop areas R acquired in the loop position extraction process. In the loop position extraction process, the information of the positions of the needle loop areas R is acquired based on the information of the positions of the representatives M. Therefore, the acquired needle loop areas R indicate the positions of the needle loops N more accurately than the above-described highly similar areas. The needle loop areas R acquired in the loop position acquisition process are aligned along the course and wale directions. However, because of the influence of the above-described variation of the stitches, etc., directions in which the needle loop areas R are aligned may be inclined relative to the course direction (transverse direction of the picture image) of FIG. 2 and wale direction (longitudinal direction of the picture image) of FIG. 2.

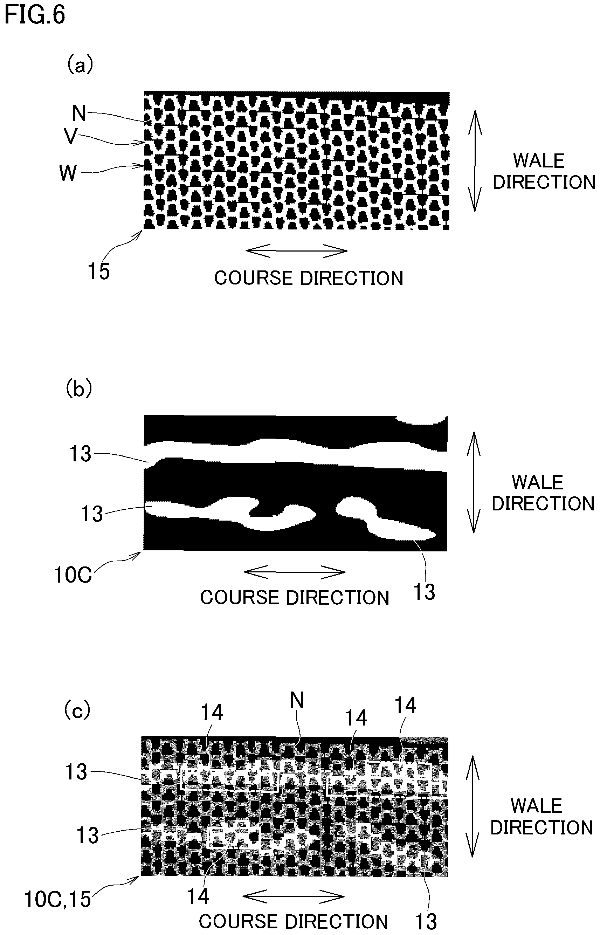

In the loop position acquisition process, the image processor 7 divides each needle loop area R into a yarn area V where the yarn Y is located and a background area W where the yarn Y is not located based on the magnitude relationship between a predetermined threshold and the brightness at each position of the acquired needle loop area R. Furthermore, the image processor 7 generates data of an area divided image 15 which is the picture image in which yarn areas V and background areas W are divided to be different in brightness from each other by predetermined magnitude or more as shown in FIG. 6(a).

In First Embodiment, a combination of the steps S108 to S110 is a stitch information acquisition process of the present invention. In First Embodiment, information of positions of the yarn areas V is indicated by the data of the area divided image 15 as shown in FIG. 6(a), and this information of the positions of the yarn areas V is equivalent to information regarding positions of the needle loops N of the present invention (stitch information of the present invention).

After the completion of the steps S103 to S107 and the steps S108 to S110, the image processor 7 then performs an uneven area extraction process (step S111). In the uneven area extraction process, the image processor 7 extracts a continuous area part of each possible uneven area 13 as an uneven area 14 based on the position of the possible uneven area 13 having been extracted in the step S107 and the positions of the needle loops N having been extracted in the step S110. In this regard, this continuous area part of the possible uneven area 13 overlaps a predetermined number or more of the needle loops N aligned along the course direction.

For example, FIG. 6(b) shows an enlarged part of the possible uneven area extraction image 10C of FIG. 4(c). The size of this enlarged part in FIG. 6(b) is the same as that of the enlarged part in FIG. 6(a). In the uneven area extraction process, as shown in FIG. 6(c), the image processor 7 extracts, e.g., the continuous area part of each possible uneven area 13 as the uneven area 14. In this regard, when the area divided image 15 of FIG. 6(a) overlaps the possible uneven area extraction image 10C of FIG. 6(b), this continuous area part of the possible uneven area 13 overlaps a predetermined number or more of the needle loops N aligned along the course direction. For easier understanding of the figure, FIG. 6(c) shows the positions of the needle loops N in FIG. 6(a) by using a different concentration from the positions of the possible uneven areas 13 in FIG. 6(b). In the example of FIG. 6(c), for example, when the above-described predetermined number is two, an area part of each possible uneven area 13 is extracted as the uneven area 14 located in frames of two-dot chain lines.

Subsequently, the image processor 7 evaluates the dyeing quality of the knit fabric based on the extracted uneven areas 14 (step 112). For example, an evaluation method of the dyeing quality of the knit fabric is the same as in Patent Literature 1. To be more specific, the image processor 7 connects two or more uneven areas 14 whose separation distance is equal to or shorter than first distance in the wale direction and than second distance in the course direction. The image processor 7 then regards these uneven areas 14 as one uneven area. Subsequently, the image processor 7 creates a histogram regarding the ratio of width of each uneven area 14 after the above-described connection and evaluates the dyeing quality of the knit fabric based on the frequency of appearance of this uneven area 14 per class of the ratio of the width. However, the dyeing quality of the knit fabric may be differently evaluated based on the extracted uneven areas 14.

### <Effects>

A direction in which an area with uneven dyeing extends is determined by a direction of the stitches of the knit fabric, i.e., a direction in which the needle loops N are aligned. The direction in which the needle loops N are aligned may vary among areas of the knit fabric because of the influence of variation of the stitches, etc. In First Embodiment, the possible uneven area information which is information of each possible uneven area 13 functioning as a candidate of an uneven area 14 is acquired based on the brightness information. Furthermore, information of the positions of the needle loops N is acquired as the stitch information which is information of the positions of the stitches on the picture image. Each uneven area 14 is extracted based on the possible uneven area information and the stitch information. Because of this, even when the direction in which the needle loops N are aligned varies because of the influence of variation of the stitches, etc., each uneven area 14 is accurately extracted.

In First Embodiment, the highly similar areas which are highly similar to the sample image P of a needle loop N are extracted on the picture image. In each highly similar area, information of a position of a representative M of a needle loop N is acquired based on the brightness information. Information of the positions of the needle loops N is then acquired based on information of the positions of the representatives M of the needle loops N. Because of this, information of the positions of the needle loops N is accurately acquired.

In First Embodiment, an edge included in the picture image is detected, each high contrast area 12 in which the gradient of the edge is equal to or higher than the first predetermined value is extracted, and among at least one high contrast area 12, a high contrast area 12 which meets the following conditions is extracted as a possible uneven area 13: a condition in which the aspect ratio of the size in the course direction to the size in the wale direction is equal to or larger than the second predetermined value; and a condition in which length in the wale direction is within a predetermined range. In each possible uneven area 13, a continuous area part overlapping a predetermined number or more of the needle loops N aligned serially along the course direction is extracted as an uneven area 14. Because of this, the high contrast area 12 whose aspect ratio is high and which is short in the wale direction, i.e., each high contrast area 12 which has the characteristics of the uneven dyeing and which is narrow and long in the course direction is extracted as the possible uneven area 13. In each extracted possible uneven area 13, the area part which is continuous in the direction in which the needle loops N are aligned is extracted as the uneven area 14. It is therefore possible to accurately extract the uneven areas 14.

### [Second Embodiment]

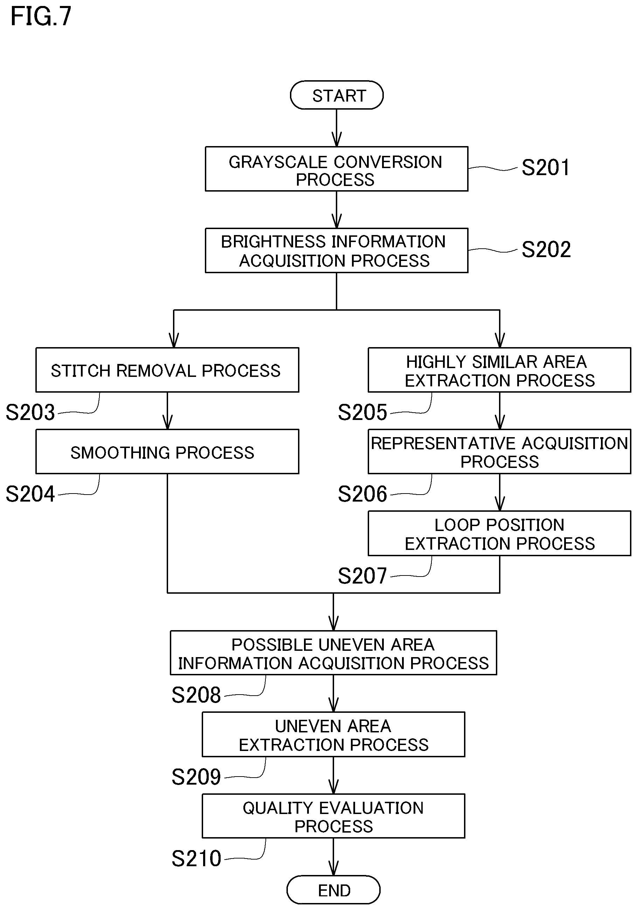

The following will describe preferred Second Embodiment of the present invention with reference to figures. Second Embodiment relates to the same test facility 1 as that in First Embodiment. In Second Embodiment, an image processor 7 performs processes in accordance with a flowchart of FIG. 7 so as to extract uneven areas and evaluates the dyeing quality of a knit fabric based on the extracted uneven areas.

To be more specific, the image processor 7 performs the same grayscale conversion process as the step S101 of First Embodiment (step S201) and then performs the same brightness information acquisition process as the step S102 of First Embodiment (step S202). However, in Second Embodiment, processes subsequent to the step S202 are also performable for the color image without converting a picture image to the gray scale.

Subsequently, the image processor 7 performs the same stitch removal process (step S203) and smoothing process (step S204) as the steps S103 and S104 of First Embodiment in parallel with the same highly similar area extraction process (step S205), representative acquisition process (step S206), and loop position extraction process (step S207) as the steps S108 to S110 of First Embodiment. Similarly to First Embodiment, the smoothing process of the step S204 may not be performed.

Being different from First Embodiment, the following types of information are acquired in the loop position extraction process of the step 207 of Second Embodiment: information of positions of needle loop areas R; and information of a position of a yarn area V in each needle loop area R.

In Second Embodiment, a combination of the steps S205 to S207 is equivalent to the stich information acquisition process of the present invention. In Second Embodiment, information regarding (i) a position of each needle loop areas R and (ii) a position of a yarn area V in each needle loop area R is equivalent to information of a position of each needle loop N (stitch information of the present invention).

After the completion of the steps S203 and S204 and the steps S205 to S207, the image processor 7 then performs a possible uneven area information acquisition process (step S208). In the possible uneven area information acquisition process, the image processor 7 calculates average brightness which is an average value of the brightness of a yarn area V in each needle loop area R and extracts each needle loop area R whose average brightness is less than a threshold TH as a possible uneven area. As a result, information of a position of each possible uneven area is acquired.

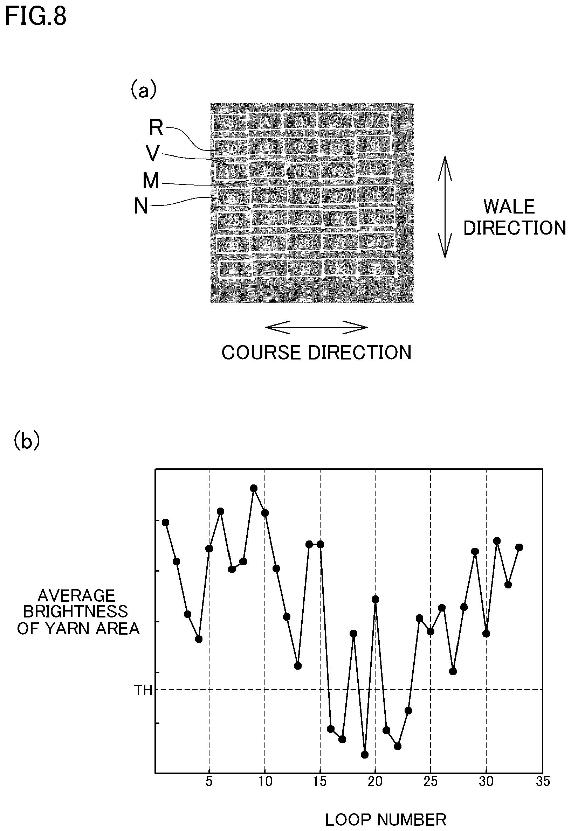

For example, FIG. 8(a) shows 33 needle loop areas R denoted by the loop numbers (1) to (33). FIG. 8(b) shows the average brightness of a yarn area V in each of the 33 needle loop areas R. In this example, needle loop areas R denoted by the loop numbers (16), (17), (19), (21), (22), and (23) are extracted as possible uneven areas. In Second Embodiment, the average brightness of each yarn area V is equivalent to representative brightness of the present invention. A condition in which "the average brightness of the yarn area V is less than the threshold TH" is equivalent to a predetermined condition of the present invention.

Subsequently, the image processor 7 performs an uneven area extraction process (step S209). In the uneven area extraction process, the image processor 7 extracts an area extending across a predetermined number or more of possible uneven areas aligned serially along the course direction as an uneven area.

For example, when the above-described predetermined number is two in the example of FIGs. 8(a) and 8(b), the following areas are extracted as uneven areas: an area extending across two needle loop areas R denoted by the loop numbers (16) and (17); and an area extending across three needle loop areas R denoted by the loop numbers (21) to (23). When the above-described predetermined number is three in the example of FIGs. 8(a) and 8(b), the area extending across the three needle loop areas R denoted by the loop numbers (21) to (23) is extracted as an uneven area.

Subsequently, the image processor 7 evaluates the dyeing quality of the knit fabric based on the extracted uneven areas in the same manner as the step S111 of First Embodiment (step 210).

### <Effects>

Also in Second Embodiment, the uneven areas are extracted based on the possible uneven area information and information of positions of needle loops N functioning as the stitch information. Therefore, even when a direction in which the needle loops N are aligned varies because of the influence of variation of stitches, etc., the uneven areas are accurately extracted.

Also in Second Embodiment, highly similar areas are extracted on the picture image, information of a position of a representative M of a needle loop N is acquired in each highly similar area, and the information of the positions of the needle loops N is acquired based on information of positions of representatives M of the needle loops N. Because of this, the information of the positions of the needle loops N is accurately acquired.

In Second Embodiment, the average brightness of a yarn area V in each needle loop area R is calculated, and each needle loop area R in which the average brightness of the yarn area V is less than the threshold TH is extracted as a possible uneven area. An area extending across a predetermined number or more of possible uneven areas aligned serially along the course direction is extracted as an uneven area. Because of this, the uneven area is accurately extracted.

### [Modifications]

The preferred embodiments of the present invention have been described. It should be noted that the present invention is not limited to the above-described embodiment, and various changes, substitutions, and alterations can be made herein without departing from the spirit and scope of the invention.

In First Embodiment, a high contrast area 12 whose aspect ratio is equal to or higher than the second predetermined value and whose length in the wale direction is within a predetermined range is extracted as a possible uneven area 13. However, the disclosure is not limited to this. In First Embodiment, the high contrast area 12 whose aspect ratio is equal to or higher than the second predetermined value may be extracted as the possible uneven area 13 regardless of the length in the wale direction.

In Second Embodiment, the average brightness of a yarn area V of each of the needle loop areas R is calculated as a representative value of the brightness of the yarn area V of each of the needle loop areas R, and each needle loop area R in which the average brightness of the yarn area V is less than the threshold TH is extracted as a possible uneven area. However, the disclosure is not limited to this. For example, in Second Embodiment, a different value such as a median, maximum value, or minimum value of the brightness of the yarn area V may be calculated as the representative brightness which is the representative value of the brightness of the yarn area V of each of the needle loop areas R. Each needle loop area R which meets a predetermined condition different from a condition in which the representative brightness of the yarn area V is less than the threshold TH may be extracted from the possible uneven area.

In First and Second Embodiments, the highly similar areas are extracted on the picture image, information of a position of a representative M of a needle loop N is acquired in each highly similar area, and information of a position of the needle loop N is acquired based on the information of the position of the representative M. However, the disclosure is not limited to this. For example, when the highly similar areas are extracted as areas which accurately indicate the positions of the needle loops N, information of positions of the highly similar areas may be acquired as information of the positions of the needle loops N. The information of the positions of the needle loops N may be differently acquired.

A method of extracting each uneven area 14 based on the possible uneven area and the stitch information is not limited to that in First and Second Embodiments. Each uneven area 14 may be extracted based on the possible uneven area information and the stitch information in a manner different from those of First and Second Embodiments.

In this case, the possible uneven area information may be the same information as in First and Second Embodiments or may be information which is of a position of the possible uneven area and which is different from that in First and Second Embodiments. The possible uneven area information may be differently acquired, regardless of whether the possible uneven area information is the same information as in First and Second Embodiments.

In this case, the stitch information may be the same information as the information of the positions of the needle loops N as in First and Second Embodiments or may be information which is positions of stitches and which is different from that in the First and Second Embodiments. The stitch information may be differently acquired, regardless of whether the stitch information is the same information as the information the positions of the needle loops N of First and Second Embodiments.

The dyeing quality of the knit fabric may be evaluated based on the extracted uneven area 14 in a manner different from those of First and Second Embodiments. In First and Second Embodiments, the image processor 7 extracts the uneven area 14 and evaluates the dyeing quality of the knit fabric based on the extracted uneven area 14. However, the disclosure is not limited to this. For example, the image processor 7 may output data of a histogram regarding the ratio of width of the extracted uneven area 14, and an operator may evaluate the dyeing quality of the knit fabric based on this output data.

### [Reference Signs List]

7 image processor
9 storage unit
12 high contrast area
13 possible uneven area
14 uneven area
M representative
N needle loop
P sample image
R needle loop area
S knit fabric sample
V yarn area

## Claims

1. An image processor configured to extract an uneven area corresponding to uneven dyeing from a picture image obtained by taking a picture of a dyed knit fabric, the image processor being configured to perform:
a brightness information acquisition process of acquiring brightness information which is information of brightness at each position on the picture image;
a possible uneven area information acquisition process of acquiring possible uneven area information which is information of a position of at least one possible uneven area which is a candidate of the uneven area based on the brightness information;
a stitch information acquisition process of acquiring stitch information which is information of a position of a stitch on the picture image based on the brightness information; and
an uneven area extraction process of extracting the uneven area based on the possible uneven area information and the stitch information.

2. The image processor according to claim 1, wherein, information of positions of needle loops forming the stitch is acquired as the stitch information in the stich information acquisition process.

3. The information processor according to claim 2, further comprising a storage unit which stores sample image information which is information of a sample image of one of the needle loops, wherein,
in the stitch information acquisition process, highly similar areas which are highly similar to the sample image are extracted on the picture image based on the brightness information and the sample image information, and
the information of the positions of the needle loops is acquired by using information of positions of the highly similar areas.

4. The image processor according to claim 3, wherein, in the stitch information acquisition process, information of a position of a representative of each of the needle loops is acquired in each of the highly similar areas based on the brightness information, and
the information of the positions of the needle loops is acquired based on the information of the position of the representative of the each of the needle loops in the highly similar areas.

5. The image processor according to any one of claims 2 to 4,
wherein, in the possible uneven area information acquisition process,
an edge included in the picture image is detected based on the brightness information,
at least one high contrast area in which the gradient of the edge is equal to or higher than a first predetermined value is extracted,
among the at least one high contrast area, a high contrast area whose aspect ratio of the size in a course direction to the size in a wale direction is equal to or higher than a second predetermined value is extracted as the at least one possible uneven area, and
in the uneven area extraction process,
a continuous area part which is of the at least one possible uneven area and which overlaps a predetermined number or more of the needle loops aligned serially along the course direction is extracted as the uneven area.

6. The image processor according to claim 5, wherein, in the possible uneven area information acquisition process, among the at least one high contrast area, the high contrast area whose aspect ratio of the size in the course direction to the size in the wale direction is equal to or higher than the second predetermined value and whose size in the wale direction is within a predetermined range is extracted as the at least one possible uneven area.

7. The image processor according to any one of claims 2 to 4, wherein, in the stitch information acquisition process,
information of positions of needle loop areas which are aligned in the wale and course directions and which respectively include the needle loops on the picture image is acquired as the information of the positions of the needle loops,
in the possible uneven area information acquisition process, representative brightness which is a representative value of the brightness of a yarn area where a yarn is located is calculated in each of the needle loop areas based on the brightness information and the stitch information, and at least one which is of the needle loop areas and whose representative brightness meets a predetermined condition is extracted as the at least one possible uneven area,
in the uneven area extraction process,
the at least one possible uneven area includes possible uneven areas, and an area extending across a predetermined number or more of the possible uneven areas aligned serially along the course direction is extracted as the uneven area.
